Europäisches Patentamt

(19) European Patent Office

Office européen des brevets

(11) Numéro de publication: **0 230 167 B1**

# (12) FASCICULE DE BREVET EUROPEEN

(45) Date de publication de fascicule du brevet:
21.08.91

(51) Int. Cl.⁵: **A23L 1/01**, A23B 4/00,
A23L 3/00

(21) Numéro de dépôt: 86402612.5

(22) Date de dépôt: 25.11.86

(54) Procédé de préparation de produits alimentaires pour une conservation de longue durée.

(30) Priorité: 29.11.85 FR 8517659

(43) Date de publication de la demande:
29.07.87 Bulletin 87/31

(45) Mention de la délivrance du brevet:
21.08.91 Bulletin 91/34

(84) Etats contractants désignés:
AT BE CH DE ES GB GR IT LI LU NL SE

(56) Documents cités:
FR-A- 2 552 628
GB-A- 1 032 072
GB-A- 2 068 207

FSTA JOURNAL, 85-10-s0185, Réf. 85062732;
A. STIEBING: "Heat treatment and shelf-life
of frankfurter-type sausages", & FLEISCH-
WIRTSCHAFT, vol. 65, no. 1, pages
31-34,37-40,69, 1985

FSTA JOURNAL, 85-08-s0009, réf. 85049000;
J.L. MARTIN: "Control of cooking with the aid
of pasteurization and cooking values. IV. Determination of optimun heat treatment
conditions", & VIANDES ET PRODUITS CAR-
NES, vol. 5, no. 5, pages 204-207, 1984,

FSTA JOURNAL, 81-10-a0601, réf. 81052532;
H. SCHLEUSENER et al.: "The C-value - a
parameter in heat treatment of foods"; &
LEBENSMITTELINDUSTRIE, vol. 27, no. 7, pages 297-300, 1980
(73) Titulaire: **UNION POUR LE COMMMERCE LE
FINANCEMENT ET LES ETUDES**
29, rue Tronchet
F-75009 Paris(FR)

(72) Inventeur: **Pinon, Daniel**
**Rue Basse Prouilly**
**F-51140 Jonchery-sur-Vesles(FR)**

(74) Mandataire: **Hammond, William et al**
**Cabinet CORRE & HAMMOND 17 rue Pasteur**
**F-92300 Levallois(FR)**

Rank Xerox (UK) Business Services

## Description

La présente invention a trait à un procédé de préparation de produits alimentaires, qui comprend un traitement thermique et qui est destiné à leur assurer une conservation de longue durée, en particulier si les produits alimentaires préparés sont entreposés au froid positif (entre + 3° C et + 5° C), sans détériorer les qualités et caractéristiques organoleptiques, en particulier gustatives, des produits alimentaires frais correspondants, c'est-à-dire des mêmes produits alimentaires n'ayant pas subi de traitement thermique autre que celui nécessaire à sa préparation.

Pour permettre une conservation de longue durée de produits alimentaires, il est actuellement bien connu de mettre en oeuvre plusieurs procédés différents, tels que l'appertisation ou stérilisation, la pasteurisation, la surgélation, l'ionisation par irradiation, et la lyophilisation. FSTA Journal 85-10-₅0185, Ref. 85062732 est relatif aux traitements thermiques et à la conservation des saucisses de type Francfort.

La stérilisation est un procédé de conservation qui, dans sa forme conventionnelle, dégrade les produits alimentaires traités au plan organoleptique, et affecte en particulier leur saveur et leur aspect. De ce fait, ce procédé ne permet pas de fabriquer ou préparer des produits de haut de gamme. En conséquence, ce procédé n'est utilisé à grande échelle que pour traiter des produits alimentaires qui ne sont pas initialement des produits de haut de gamme.

La surgélation est un procédé de conservation qui provoque également des degradations physico-chimiques irréversibles des produits traités, en affectant notamment leurs protéines et l'amidon qu'ils contiennent, du fait de l'exposition des produits traités au froid négatif. Pour cette raison, ce procédé également n'est utilisé que pour préparer des produits qui ne sont pas de haut de gamme.

La réfrigération est un procédé de conservation satisfaisant au plan organoleptique, tant que le délai de conservation des produits alimentaires réfrigérés est très court. Mais ce procédé a pour inconvénient de ne pas interrompre l'activité microbienne ni l'activité enzymatique. En particulier, les spores de Clostridium botulinium de type E, qui sont les micro-organismes les plus dangereux pour l'organisme humain parmi ceux qui sont potentiellement présents dans les produits alimentaires, peuvent germer dans certaines conditions de température, rencontrées lors de la conservation au froid positif, en particulier dès que la température devient supérieure à 2,2° C, et végéter à partir de + 3° C.

La lyophilisation est un procédé de conservation dont la mise en oeuvre est très onéreuse, et qui, de plus, est réservé à quelques produits alimentaires ou matières premières qui ne sont pas de haut de gamme.

La conservation des produits alimentaires frais, au froid positif, et sous vide est un procédé qui ralentit ou arrête le développement de la majeure partie de la flore microbienne aérobie. Mais il peut favoriser, dans certains cas (pH élevé, charge microbienne élevée, flore lactique insuffisante), la germination et la végétation des micro-organismes les plus dangereux (Clostridium botulinium) et permettre, de plus, la formation de zones, telles que les exsudats et les substrats, qui sont particulièrement favorables au développement de toutes les bactéries anaérobies strictes ou facultatives.

Enfin, l'irradiation ionisante n'est autorisée que pour certains produits, à des doses d'irradiation telles qu'elle réduit la charge microbienne sans cependant la détruire totalement. De plus, les doses stérilisantes dégradent les produits alimentaires, sont dangereuses pour la santé publique et ne sont autorisées que pour les emballages. Un autre inconvénient de ce procédé de conservation est que les installations d'irradiation sont d'un coût très élevé.

Les procédés de conservation connus ont donc pour inconvénient commun qu'aucun d'entre eux ne permet simultanément d'assurer une sécurité microbiologique totale, de respecter les qualités et caractéristiques organoleptiques initiales des produits alimentaires traités, d'être utilisable pour une gamme très étendue de produits alimentaires, et enfin de pouvoir être mise en oeuvre au prix d'investissements compétitifs.

L'invention a pour but de proposer un procédé de préparation de produits alimentaires qui permet une conservation de longue durée de ces produits en offrant les avantages de chacun des procédés de conservation connus et présentés ci-dessus, tout en remédiant à leur inconvénient commun. L'investissement en matériel pour la mise en oeuvre du procédé selon l'invention n'est pas plus élevé que celui nécessaire pour les autres techniques de conservation, car le procédé selon l'invention comprend un traitement thermique, ou une cuisson, qui peut être exécuté à l'aide de moyens matériels simples et d'un faible coût. La sécurité microbiologique est assurée conformément aux réglementations en vigueur, et elle résulte de l'application de techniques scientifiquement admises, qui sont maîtrisées, conformément à l'invention, pour chaque cas d'espèce.

L'invention a donc pour but de proposer un procédé de traitement de produits alimentaires permettant une conservation de longue durée de ces derniers en respectant leurs qualités organoleptiques et en s'adaptant aux caractéristiques de chaque produit alimentaire traité, pris individuellement.

En d'autres termes, l'invention a pour but de proposer un procédé de traitement de produits alimentaires, en vue d'assurer leur conservation sur une longue durée, qui soit d'une grande souplesse d'adaptation aux exigences inhérentes à chaque produit alimentaire traité, en fonction non seulement de la nature et de la fragilité de la matière première, mais également de son emballage et des exigences industrielles pour sa préparation et son conditionnement, étant bien entendu que le produit préparé devra être un produit stable et tendant à ressembler le plus fidèlement possible au produit initial, du point de vue organoleptique, et en particulier gustatif.

Le principe à la base du procédé selon l'invention consiste à assurer une sécurité totale au plan microbiologique en détruisant, par des moyens sensiblement analogues à ceux d'une pasteurisation, les streptocoques D potentiellement présents dans les produits alimentaires, et par conséquent toutes les formes végétatives moins thermo-résistantes, et, simultanément, en neutralisant les micro-organismes sous forme sporulée, sans aller jusqu'à les détruire, ce qui impliquerait de recourir aux moyens d'une stérilisation, qui serait dommageable à l'aspect et à la saveur des produits traités, comme cela a déjà été présenté ci-dessus.

Pour parvenir à cette neutralisation des micro-organismes sous forme sporulée, le principe à la base de l'invention consiste à créer des conditions physico-chimiques telles que ces micro-organismes ne puissent germer et se développer, en se référant aux micro-organismes les plus dangereux, à savoir le Clostridium botulinium.

En ce qui concerne les micro-organismes végétatifs, il est communément admis qu'ils sont détruits dans une mesure satisfaisante lorsque le nombre des streptocoques D, qui sont les plus résistants à la chaleur, est ramené, en fin de traitement thermique, à une valeur de $10^0$ parunité de volume, à partir d'une charge théorique de $10^{20}$. Pour s'assurer de la destruction des streptocoques D, il est connu ce soumettre un produit alimentaire à préparer à un traitement thermique dont la durée et la température de chauffe sont telles, en fonction du pH du produit traité, qu'en fin de traitement thermique on ait au moins atteint une valeur particulière appelée valeur pasteurisatrice P, qui est exprimée en points. Par exemple, si lé pH est de 7, pour détruire les streptocoques D, il est nécessaire d'atteindre une valeur pasteurisatrice P de 40 points.

En se reportant aux tables de J. E. REICHERT, publiées dans la revue "Die Fleischerei", n° 12 de 1980, aux pages 1173 à 1176, on constate que, pour un pH donné du produit traité, à une minute de chauffage de ce produit à une température donnée, correspond un nombre donné de points de la valeur pasteurisatrice.

Donc, la connaissance de la courbe de cuisson du produit, ou courbe d'évolution de la température de cuisson à coeur du produit en fonction du temps, et de son pH, permet de calculer la valeur de pasteurisation atteinte, comme étant la somme des points obtenus aux termes des minutes successives de la cuisson, compte tenu des températures de chauffage à coeur au cours de ces minutes.

Inversement, connaissant la valeur pasteurisatrice P à atteindre pour un produit de pH donné, on peut déterminer la courbe de cuisson, et en particulier choisir la température maximum ou les températures minimum et maximum, et les temps de maintien en palier à cette température ou d'évolutions entre ces températures, pour être sûr que la valeur pasteurisatrice P sera bien atteinte à la fin de la cuisson. Dans ce cas, il convient de ne pas oublier de tenir compte des points acquis au cours d'éventuelles phases antérieures de cuisson ou de chauffage initiales, subies par le produit traité.

De plus, on sait que si le pH du produit traité diminue, la pasteurisation est plus rapide, de sorte que la valeur pasteurisatrice P sera atteinte pour des durées et températures de cuisson plus faibles.

Par ailleurs, il est connu d'exprimer par une certaine valeur, appelée valeur cuisatrice, la cuisson qu'il faut faire subir à un produit alimentaire pour que ce produit soit bon "au goût". Par cuisson, il faut entendre l'ensemble des différentes cuissons ou traitements thermiques successifs que subit le produit. Le chauffage d'un produit donné pendant une minute à une température donnée correspond à une certaine valeur de cuisson, ou quantité de cuisson, apportée au produit, et qui correspond à la surface délimitée pendant cette minute de chauffage entre la courbe de cuisson (température en fonction du temps) et l'axe des temps. Pour qu'un produit alimentaire particulier présente les meilleures qualités gustatives après cuisson, il existe donc une valeur de surface de cuisson optimum pour ce produit, qui doit être atteinte, mais non dépassée, à la fin de la cuisson. Cette valeur optimum de la surface de cuisson, appelée valeur cuisatrice, et propre à chaque produit à traiter, peut être obtenue à la fin d'une infinité de courbes de cuisson différentes.

Compte tenu de ce qui précède, une caractéristique propre au procédé selon l'invention consiste à déterminer la valeur cuisatrice particulière à un produit alimentaire à traiter, à déterminer ensuite une courbe de cuisson à la fin de laquelle la valeur cuisatrice est atteinte sans être dépassée, à déterminer par ailleurs la valeur pasteurisatrice du produit à partir de la mesure de son pH, et à vérifier que lorsque la valeur cuisatrice a été atteinte, la valeur pasteurisatrice a également au moins été atteinte, et, de préférence, dépassée, et, si cela n'est pas le cas, à changer la valeur du pH du produit et, éventuellement, la température maximale de la courbe de cuisson, de sorte qu'à la fin de cette dernière, la valeur cuisatrice soit atteinte après avoir dépassé la valeur pasteurisatrice.

On a ainsi la certitude que, d'une part, le produit est cuit juste à point pour que son goût soit le meilleur et que, d'autre part, les streptocoques D sont détruits, et donc toutes les formes végétatives

Mais il faut encore, simultanément, neutraliser les micro-organismes à l'état sporulé, et en particulier le Clostridium botulinium potentiellement présent dans le produit alimentaire traité.

On sait, à ce propos, que si l'on effectue une appertisation ou stérilisation du produit, c'est-à-dire si ce produit est porté rapidement à une température élevée, certains micro-organismes adoptent une attitude de défense en sporulant, puis reprennent leur développement dès que les conditions de température leur sont redevenues favorables. De plus, il est admis qu'un produit alimentaire se trouve dans un état commercialement stérile lorsqu'en fin de traitement thermique le nombre de germes de Clostridium botulinium a été ramené de $10^{12}$ à $10^0$. Ceci est par exemple obtenu, pour un produit dont le pH est de 7, si la température à coeur est maintenue à 121,1 °C pendant 2,52 mn, alors que si le pH du produit n'est que de 4,5, le même résultat est obtenu en maintenant une température de 85 °C pendant 2 mn seulement. On sait, de plus, que des microorganismes ayant sporulé ne peuvent germer qu'en présence d'eau libre dans le milieu. On a défini dans le produit (en raison des termes anglais "Activity Water" c-a-d activité d'eau), et qui varie entre 0 et 1, et l'on sait que pour un pH de 7, les spores de Clostridium botulinium sont inhibées lorsque AW est inférieur à 0,91, et qu'en fonction du pH, la valeur d'inhibition du rapport AW évolue selon des courbes connues délimitant une zone de germination stable à une température inférieure à + 2 °C, une zone d'inhibition totale, et une zone intermédiaire d'inhibition, stable à une température de + 7 à + 10 °C.

Une autre caractéristique propre à l'invention consiste donc à s'assurer que, lorsque la valeur cuisatrice est atteinte, le rapport AW et le pH du produit correspondent à un point de la zone d'inhibition stabilisée à une température de + 7 à + 10 °C, ce qui autorise une conservation de longue durée dans des conditions industrielles usuelles et convient aux délais les plus couramment fixés par les contraintes commerciales relatives aux dates limites de vente.

L'invention a donc pour objet un procédé de préparation d'un produit alimentaire, permettant d'assurer une conservation de longue durée de ce produit sans en détériorer les qualités et caractéristiques organoleptiques, et qui consiste :
- à déterminer la valeur cuisatrice du produit, et
- à soumettre le produit à un traitement thermique ou cuisson, permettant d'atteindre ladite valeur cuisatrice sans la dépasser,

et ce procédé se caractérise par le fait qu'il consiste en outre :
- à mesurer le pH du produit et à en déduire la valeur pasteurisatrice correspondante,
- à mesurer le rapport AW de l'eau libre à l'eau totale contenue dans le produit, et
- à déterminer la courbe de chauffage du traitement thermique, en jouant sur les valeurs du pH et/ou du rapport AW du produit, sans diminuer le pH en-dessous de 4,5 et en veillant à ce que l'évolution de la température de cuisson dans le temps permette de dépasser la température du minimum léthal sous laquelle les streptocoques D ne sont pas détruits, afin d'obtenir simultanément que, lorsque la valeur cuisatrice est atteinte, la valeur pasteurisatrice est au moins atteinte, et de préférence dépassée, et que le produit se trouve dans des conditions physico-chimiques correspondant à la zone d'inhibition des germes de Clostridium botulinium.

Avantageusement, le procédé consiste de plus à effectuer le traitement thermique au bain-marie ou à l'étuve, avec une pente relativement faible de montée en température entre une température minimale et une température maximale choisies en tenant compte des caractéristiques rhéologiques du produit alimentaire préparé, la température maximale restant toujours inférieure à 100 °C afin d'empêcher une destruction de l'aspect du produit. En effet, il n'est pas avantageux que la température à coeur du produit augmente rapidement, car, vers 75 °C, les micro-organismes sporulés germent, de sorte qu'il est ensuite possible de les détruire ou de les inhiber. Au contraire, si la température augmente rapidement, ces micro-organismes peuvent rester à l'état sporulé. Le chauffage au bain-marie ou à l'étuve a l'avantage de permettre la reproduction avec une grande fiabilité d'une courbe de chauffage à pente relativement faible, et il peut être réalisé à l'aide de moyens matériels peu coûteux. De plus, sa régulation est simple.

Selon une caractéristique propre à l'invention, on déduit la valeur pasteurisatrice P à partir du pH mesuré, à l'aide d'une portion linéaire d'une courbe semi-logarithmique représentative d'une fonction continue et croissante de la valeur pasteurisatrice en fonction du pH.

Dans une forme préférée de réalisation, permettant simultanément d'ajuster les températures de cuisson, et en particulier la température maximale, qui a une incidence sur l'aspect du produit à la fin de la cuisson, le procédé selon l'invention est tel qu'il consiste, au début du traitement thermique, à mesurer également la température initiale du produit, à déterminer la plage de températures du traitement thermique à l'aide d'un faisceau de courbes donnant, pour différentes valeurs du pH, les valeurs pasteurisatrices en fonction de la température et du temps, à calculer, en se basant sur ce faisceau de courbes la somme des points de pasteurisation pour le pH relevé, et, lorsque la valeur cuisatrice est atteinte, à conserver le traitement thermique et les conditions physico-chimiques du produit ainsi définis si ladite somme est supérieure à la valeur pasteurisatrice, tandis que si ladite somme est inférieure à la valeur pasteurisatrice, on modifie le pH du produit et la température maximum du traitement thermique, et que, si ladite somme est sensiblement égale à la valeur pasteurisatrice, on modifie la température maximum afin d'obtenir un nouveau traitement thermique pour lequel ladite somme sera supérieure à la valeur pasteurisatrice dès que la valeur cuisatrice aura été atteinte, à mesurer le rapport AW après un refroidissement rapide à coeur du produit, à lire sur les courbes donnant les valeurs du rapport AW en fonction du pH si l'on se trouve dans une zone de stabilité du produit et d'inhibition du Clostridium botulinium, et si le produit se situe dans la zone de germination, à modifier le pH et le rapport AW, de sorte qu'il vienne dans la zone d'inhibition.

Il est bien connu qu'une température élevée a un effet léthal sur les micro-organismes plus important sans que soit pour autant modifiée la valeur cuisatrice, et ce dans des proportions admissibles (toutes proportions gardées, "les minutes cuisent plus que les degrés").

Avantageusement selon l'invention, on mesure le pH du produit dans la phase solide et dans la sauce, et on retient le pH le plus élevé pour le traitement.

Par ailleurs, il est également préférable d'appliquer le traitement thermique en reproduisant une courbe de pénétration de la chaleur à coeur, au point critique du produit, qui a été enregistrée lors de la détermination de la valeur cuisatrice du produit.

Le procédé selon l'invention tel que défini ci-dessus est particulièrement destiné à la préparation industrielle de produits alimentaires du type plats cuisinés ou autres, distribués en froid positif et vendus par des chaînes de magasins, à la préparation à l'avance et en nombre de plats cuisinés destinés à la restauration collective ou à des chaînes de restaurants pour lesquelles il présente l'avantage de permettre une fabrication en cuisine centralisée et le réchauffage des plats dans des fours à micro-ondes permettant de satisfaire rapidement à la demande de la clientèle, ainsi qu'à la préparation de plats cuisinés pour des distributeurs automatiques en armoires frigorifiques, etc.

Pour mieux faire comprendre l'objet de l'invention, on va en décrire maintenant, à titre d'exemples illustratifs, deux modes de mise en oeuvre du procédé, en se référant aux dessins annexés.

Sur ces dessins :

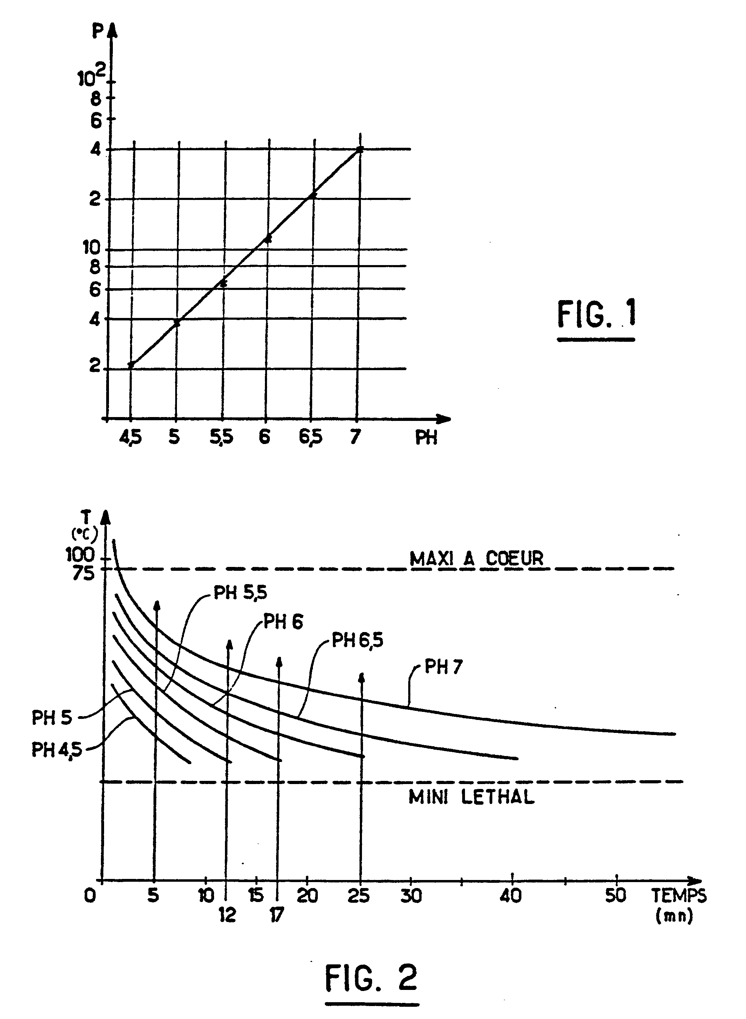

- la figure 1 est une représentation, en coordonnées semi-logarithmiques, d'une portion linéaire d'une fonction continue et croissante de la valeur pasteurisatrice P en fonction du pH,
- la figure 2 est un faisceau de courbes représentatives de la température de cuisson en fonction du temps, pour différentes valeurs du pH, et sur lesquelles ont été portées des valeurs pasteurisatrices, les courbes étant continûment décroissantes et à concavité tournée vers le haut, entre une température maximum à coeur et une température minimum correspondant au seuil léthal pour la destruction des streptocoques D (c'est-à-dire au seuil de température sous lequel les streptocoques D ne peuvent pas être détruits), et

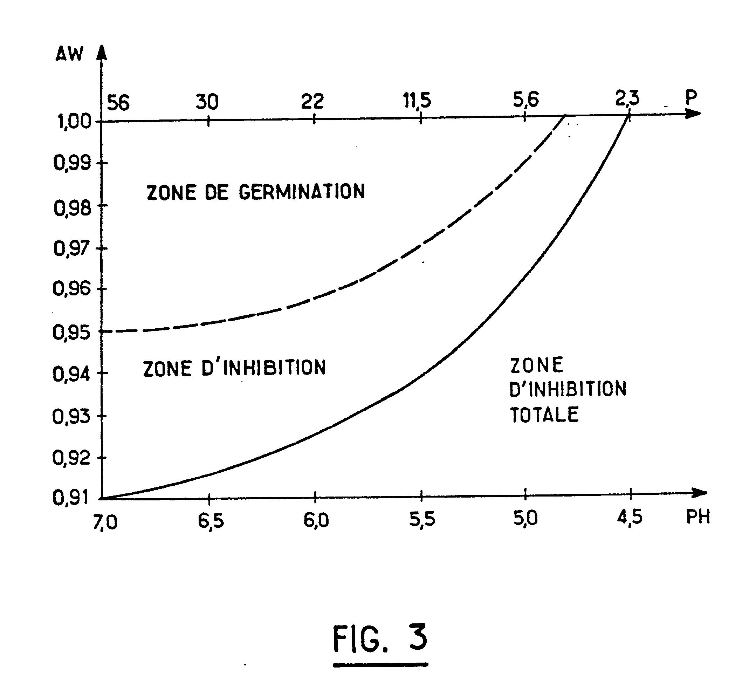

- la figure 3 est un graphique indiquant les courbes à concavités tournées vers le haut qui représentent les évolutions du rapport AW, entre 0,91 et 1, en fonction du pH, compris entre 7 et 4,5, d'une part pour la limite de végétation du Clostridium botulinium qui sépare la zone de germination stable à une température inférieure à + 2° C de la zone d'inhibition stable pour une température de + 7 à + 10° C , et, d'autre part, la limite séparant cette dernière zone de la zone d'inhibition totale, certaines valeurs pasteurisatrices P ayant de plus été portées en haut de ce graphique, parallèlement à l'axe des pH.

La mise en oeuvre du procédé de préparation selon l'invention suppose que la valeur cuisatrice optimum du produit à préparer soit connue avec une bonne précision. Pour déterminer cette valeur cuisatrice, il est possible de procéder de la manière suivante : on mesure tout d'abord la courbe de pénétration de la chaleur dans le produit, à l'aide d'un enregistreur de température du type CTD 85 ELLAB, en plaçant la sonde thermique au point critique du produit, dans le conditionnement prévu pour sa distribution. La température ambiante est fournie par un bain-marie (ou une étuve), dont la température maximum est de 100° C. Cette courbe est enregistrée jusqu'au refroidissement.

Pour déterminer la valeur cuisatrice $C_g$ , c'est-à-dire le temps de cuisson nécessaire pour que le produit soit cuit à point sans surcuisson, on prélève des échantillons à intervalles de temps réguliers jusqu'a ce qu'un échantillon présente le goût recherché.

A cet instant, le refroidissement est opéré ; l'intervalle entre cet instant et le moment où la température est revenue à 20°C, permet de déterminer rétrospectivement sur la courbe ci-dessus, l'instant de refroidissement : on peut donc ainsi déterminer la valeur cuisatrice $C_g$ : intervalle de temps entre l'instant du début du traitement thermique et l'instant de refroidissement.

On répète ce procédé le nombre de fois nécessaire afin de déterminer la valeur cuisatrice $C_g$ avec autant de précision que possible, et de telle sorte que les résultats obtenus aient une représentativité statistique. Afin de transposer en grandeur industrielle, il est essentiel de tenir compte de la température initiale au moment du traitement thermique de conservation, ainsi que de la cuisson initiale résultant de la mise en oeuvre, pour déterminer précisément la valeur cuisatrice $C_g$ pendant le traitement de conservation.

L'utilisation d'un bain-marie ou d'une étuve se justifie, car il est ainsi possible d'obtenir une montée en température relativement lente, entre une température minimale du traitement à coeur de 65°C, au point critique, et une température maximale de 85°C, ce qui exclut l'utilisation d'un autoclave, sauf cas particuliers.

Connaissant la valeur cuisatrice du produit, pour mettre en oeuvre le procédé ou traitement de conservation selon l'invention, il est tout d'abord nécessaire de déterminer certains paramètres du produit, notamment de mesurer la température initiale $T_o$, le pH du produit ainsi que son rapport AW, et de tenir compte de son conditionnement, dont la plus petite dimension est de préférence inférieure à 50 mm. Connaissant le pH du produit, on peut déterminer la valeur pasteurisatrice correspondante à l'aide de la courbe de la figure 1, qui représente une variation linéaire, en échelle semi-logarithmique, de la valeur pasteurisatrice P en fonction du pH. Dans les tables de REICHERT, on peut lire les valeurs des points de pasteurisation par minute, pour la valeur du pH mesuré, et dont la somme, à la fin du traitement thermique, doit être au moins égal à la valeur pasteurisatrice P, si l'on veut détruire les streptocoques D lorsqu'on atteint la valeur cuisatrice.

A l'aide des courbes des valeurs pasteurisatrices données par la figure 2, on détermine ensuite la valeur du traitement thermique qui assure la destruction souhaitée des micro-organismes, en gardant à l'esprit que pour un pH inférieur à 4,5 et un traitement thermique de 2 mn à 85°C à coeur du produit, ce dernier ne sera plus un produit frais stabilisé, mais une conserve. Les courbes de la figure 2 permettent ainsi de déterminer la valeur maximum du traitement thermique (température maximum à coeur), ainsi que la plage de températures du traitement thermique, par exemple de 65 à 85°C. La température maximum à coeur est par exemple programmée dans un programmateur-enregistreur des courbes des valeurs pasteurisatrices P, cuisatrices $C_g$ et des valeurs de point de pasteurisation par minute, par température et par pH, ce programmateur-enregistreur pouvant être du type CMC 821 AK ELLAB. En se basant à nouveau sur les courbes de la figure 2, on détermine ensuite les valeurs des points de pasteurisation par minute et pour le pH mesuré, et l'on calcule la somme de ces valeurs de points. Ce calcul peut être effectué automatiquement par le programmateur-enregistreur.

On note que les courbes de la figure 2 donnant également des indications sur les durées de traitements thermiques en fonction de paliers de température, ce qui permet de savoir par avance, après avoir déterminé la valeur cuisatrice $C_g$, si le traitement résultant de cette détermination est suffisant pour obtenir la stabilisation souhaitée. Par exemple, si le pH initialement mesuré est de 5,8, pour une température maximum de 70°C, il correspond une valeur pasteurisatrice de 9,8. Selon les courbes de la figure 2, pour une température maximum de 70°C, la durée du traitement t dans ces conditions est comprise entre 6,8 et 12 mn.

Si la valeur cuisatrice $C_g$ est inférieure à 12, il faut alors diminuer le pH pour préserver les qualités organoleptiques du produit, tout en détruisant les formes végétatives et en stabilisant le produit. A un pH de 5,5 et pour une température maximum de 70°C, il correspond une valeur pasteurisatrice P de 5,4. La durée de traitement nécessaire pour atteindre cette valeur est de 5,6 mn, de sorte que l'on peut être certain qu'à la fin du traitement thermique, lorsque la valeur cuisatrice aura été atteinte, la valeur pasteurisatrice aura bien été dépassée. En reprenant l'exemple précédent, si la valeur cuisatrice $C_g$ est supérieure à 12, le traitement thermique sera suffisant et il est alors inutile de procéder à d'autres calculs. Par contre, si la valeur cuisatrice est voisine de 12, on déterminera avec précision le pH et la température maximum, de manière à disposer d'une marge de sécurité sans avoir à modifier la durée du traitement thermique.

Au plan pratique, le procédé consiste donc successivement :

1) à déterminer la valeur cuisatrice $C_g$,

2) à reproduire la courbe de pénétration de la chaleur à coeur, au point critique du produit,

3) à mesurer la température initiale au début du traitement, le pH initial dans la sauce et dans la phase solide, en retenant le pH le plus élevé pour le traitement,

4) à déterminer la valeur pasteurisatrice P à l'aide de la courbe qui l'exprime en fonction du pH,

5) à déterminer la plage de températures avec les courbes de la figure 2,

6) à appliquer le traitement thermique au bain-marie, en relevant les températures par minute, de façon que la valeur cuisatrice $C_g$ soit respectée,

7) à calculer à l'aide des tables de REICHERT ou à l'aide des courbes de la figure 2, la somme des valeurs des points de pasteurisation pour le pH mesuré, ce qui peut être effectué automatiquement par le programmateur-enregistreur CMC 821 AK ELLAB,

8) à conserver le traitement thermique prévu initialement et le produit qui en résulte si la somme des valeurs des points de pasteurisation est supérieure à la valeur pasteurisatrice,

9) à modifier par contre le pH et la température maximum si cette somme des valeurs de points de pasteurisation est inférieure à la valeur pasteurisatrice,

10) à ne modifier que la température maximum si cette somme des valeurs des points de pasteurisation est sensiblement égale à la valeur pasteurisatrice,

11) à refroidir rapidement le produit à coeur, en moins de 2 heures,

12) à mesurer le rapport AW, après le traitement thermique,

13) à relever la liste des inhibiteurs naturels tels que les alcools, les acides organiques, les nitrites et les aromates, etc...,

14) à lire sur les courbes de la figure 3 si le produit obtenu se trouve dans une zone de stabilité et d'inhibition du Clostridium botulinium,

15) à contrôler les charges microbiennes initiales et finales en germes de référence (germes testés),

16) à tenir compte des inhibiteurs naturels et de la charge microbienne finale pour admettre le produit dans la limite supérieure de la zone d'inhibition,

17) à modifier le pH, la valeur pasteurisatrice P et la température maximum si la charge microbienne finale ne correspond pas aux règlementations en vigueur,

18) à modifier le pH, le rapport AW et les sels présents dans le produit si ce dernier se situe dans la zone de germination, et

19) à entreposer, enfin, le produit au froid positif (entre + 3 et + 5°C environ).

Deux exemples de mise en oeuvre pratique sont décrits ci-dessous.


EXEMPLE 1


On prépare une poularde au vinaigre, c'est-à-dire des morceaux de poularde baignant dans une sauce à base de vinaigre qui comprend également des aromates et du vin.

On détermine la valeur cuisatrice $C_g$ comme décrit précédemment : pour ce produit, $C_g = 25$.

La température initiale $T_o$ au début du traitement thermique, c'est-à-dire après avoir fait revenir les morceaux de poularde, est de 48°C. Le pH initial, celui de la sauce ------- en l'occurrence est égal à 4,4. A l'aide de la courbe exprimant la valeur pasteurisatrice P en fonction du pH, on détermine la valeur pasteurisatrice nécessaire théorique qui est de 1,87 dans ce cas. Avec les courbes de la figure 2, on détermine la plage de températures: 65-70°C.

Puis, on applique un traitement thermique ainsi défini au bain-marie, et on calcule la somme des valeurs des points de pasteurisation : 1,85 selon cet exemple. Cette somme est sensiblement égale à la valeur pasteurisatrice P : il suffirait donc de modifier la température maximum pour bénéficier de quelques points supplémentaires de valeur P sans altérer pour autant les qualités organoleptiques du produit final et obtenir ainsi une marge de sécurité.

Mais d'après la figure 3, il apparaît que le pH et la valeur pasteurisatrice déterminent un domaine dans la zone d'inhibition totale : il n'est donc pas nécessaire de modifier les paramètres du procédé pour obtenir un produit final satisfaisant sur le plan microbien.

Les analyses microbiennes effectuées six mois et dix-neuf mois après la préparation de la poularde au vinaigre selon cet exemple, montrent que ce produit est plus que correct sur le plan bactériologique après avoir été entreposé au froid positif. Les résultats de ces analyses sont regroupés dans le Tableau I ci-dessous :

## TABLEAU I

|  | J + 6 mois | J + 19 mois |
|---|---|---|
| Flore aérobies à 30°C | $2,5 \times 10^5$ | $10^3$ |
| Coliformes fécaux | absence | absence |
| Staphylococcus aureus | absence | absence |
| Sulfitoréducteurs | absence | absence |
| Salmonelles | absence | absence |

EXEMPLE 2

On prépare un filet de Saint Pierre sauce Champagne selon le procédé de l'invention. La sauce Champagne est à base de crème, beurre, vin blanc, citron.

On détermine la valeur cuisatrice $C_g$ comme décrit précédemment, $C_g$ = 18 pour le filet de Saint Pierre.

La température initiale $T_0$ au début du traitement thermique est de 30°C. Le pH initial, celui du filet de Saint Pierre en l'occurence, est de 5,1.

A l'aide de la courbe exprimant la valeur pasteurisatrice P en fonction du pH, on détermine la valeur pasteurisatrice nécessaire théorique qui est de 4,3 dans ce cas. Avec les courbes de la figure 2, on détermine la plage de températures: 65-73°C.

Puis, on applique le traitement thermique ainsi défini au bain-marie et on calcule la somme des valeurs des points de pasteurisation : on obtient ainsi une somme égale à 8.

On refroidit rapidement le produit à coeur, en moins de 2 heures et on mesure le rapport AW de l'eau libre à l'eau totale dans le produit : ce rapport est égal à 1 dans le cas présent.

D'après la figure 3, il apparaît que le pH, la valeur pasteurisatrice et le rapport AW déterminent un domaine situé au début de la zone de germination des spores de Clostridium botulinium : il y aurait donc lieu, a priori, de modifier les paramètres du procédé afin d'obtenir un produit de qualité microbienne supérieure. Mais, grâce aux autres facteurs inhibiteurs tels que le vin blanc (champagne) et le citron, la qualité microbienne du produit est satisfaisante tant six mois que dix-neuf mois après sa préparation.

Les résultats d'analyses microbiennes sont regroupés dans le Tableau II ci-dessous :

TABLEAU II

|  | (J + 6 mois) | (J + 19 mois) |
|---|---|---|
| Flore aérobie à 30°C | $1,6 \times 10^5$ | $1,6 \times 10^4$ |
| Coliformes fécaux | absence | absence |
| Staphylococcus aureus | absence | absence |
| Clostridium sulfitoréduc-teurs | absence | absence |
| Salmonelles/25 g | absence | absence |

Ces deux produits préparés selon la présente invention, conservés pendant une certaine période au froid positif, et réchauffés pour être consommés, présentent des qualités organoleptiques, un goût et une structure satisfaisants pour leurs consommateurs.

**Revendications**

1. Procédé de préparation d'un produit alimentaire permettant d'assurer une conservation de longue durée de ce produit sans en détériorer les qualités et caractéristiques organoleptiques, et qui consiste :
   - à déterminer la valeur cuisatrice ($C_g$) du produit, et
   - à soumettre le produit à un traitement thermique ou cuisson permettant d'atteindre ladite cuisatrice ($C_g$) sans la dépasser,
   caractérisé par le fait qu'il consiste en outre :
   - à mesurer le pH du produit et à en déduire la valeur pasteurisatrice correspondante (P),
   - à mesurer l'activité d'eau (AW) du produit, et
   - à déterminer la courbe de chauffage du traitement thermique, en jouant sur les valeurs du pH et/ou du rapport AW du produit, sans diminuer le pH en-dessous de 4,5 et en veillant à ce que l'évolution de la température de cuisson dans le temps permette de dépasser la température du minimum léthal, sous laquelle les streptocoques D ne sont pas détruits, afin d'obtenir simultanément que lorsque la valeur cuisatrice ($C_g$) est atteinte, la valeur pasteurisatrice (P) est au moins atteinte, et de préférence dépassée, et que le produit se trouve dans des conditions physico-chimiques correspondant à la zone d'inhibition des germes de Clostridium botulinium.

2. Procédé de préparation selon la revendication 1, caractérisé par le fait qu'il consiste à effectuer le traitement thermique au bain-marie ou à l'étuve, avec une pente relativement faible de montée en température entre une température minimale et une température maximale choisies en tenant compte des caractéristiques rhéologiques du produit alimentaire préparé, la température maximale restant toujours inférieure à 100°C afin d'empêcher une destruction de l'aspect du produit.

3. Procédé de préparation selon l'une des revendications 1 et 4, caractérisé par le fait qu'on déduit la valeur pasteurisatrice (P) à partir du pH mesuré, à l'aide d'une portion linéaire d'une courbe semi-logarithmique représentative d'une fonction continue et croissante de la valeur pasteurisatrice en fonction du pH.

4. Procédé de préparation selon l'une des revendications 1 à 3, caractérisé par le fait qu'il consiste, au début du traitement thermique, à mesurer la température initiale du produit, à déterminer la plage de températures du traitement thermique à l'aide d'un faisceau de courbes donnant, pour différentes valeurs du pH, les valeurs pasteurisatrices en fonction de la température et du temps de cuisson, à calculer, en se basant sur ce faisceau de courbes, la somme des points de pasteurisation pour le pH mesuré, et, lorsque la valeur cuisatrice est atteinte, à conserver le traitement thermique et les conditions physico-chimiques du produit ainsi définis, si ladite somme est supérieure à la valeur pasteurisatrice, tandis que si ladite somme est inférieure à la valeur pasteurisatrice, on modifie le pH du produit et la température maximum du traitement thermique, et que si ladite somme est égale à la valeur pasteurisatrice, on modifie seulement la température maximum du traitement thermique, afin d'obtenir un nouveau traitement thermique pour lequel ladite somme sera supérieure à la valeur pasteurisatrice dès que la valeur cuisatrice aura été atteinte, à mesurer le rapport AW après un refroidissements rapide à coeur du produit, à lire sur les courbes exprimant AW en fonction du pH si le produit se trouve dans une zone de stabilité et d'inhibition du Clostridium, et si le produit se situe dans la zone de germination, à modifier le pH et le rapport AW de sorte qu'il vienne dans ladite zone d'inhibition.

5. Procédé de préparation selon l'une des revendications 1 à 4, caractérisé par le fait qu'on mesure le pH du produit dans la phase solide et dans la sauce, et que l'on retient le pH le plus élevé pour le traitement.

6. Procédé de préparation selon l'une des revendications 1 à 5, caractérisé par le fait qu'il consiste à appliquer le traitement thermique en reproduisant une courbe de pénétration de la chaleur à coeur, au point critique du produit, qui a été enregistrée lors de la détermination de la valeur cuisatrice.

## Claims

1. A process for the preparation of a food product allowing a long-term preservation of this product to be assured without damaging the organoleptic qualities and characteristics thereof, and which comprises:
   - determining the cooking value ($C_g$) of the product and
   - subjecting the product to a thermal treatment or cooking, allowing said cooking value ($C_g$) to be reached, without exceeding it,
   characterised in that it further comprises:
   - measuring the pH of the product and deducing therefrom the corresponding pasteurising value (P),
   - measuring the activity of the water (AW) of the product, and
   - determining the heating curve of the thermal treatment, making use of the pH values and/or the AW ratio of the product, without reducing the pH below 4.5 and seeing to it that the development of the cooking temperature in time allows the lethal minimum temperature to be exceeded, below which streptococci D are not destroyed, so that simultaneously when the cooking value ($C_g$) is reached, the pasteurising value (P) is at least reached, and preferably exceeded, and that the product is under physico-chemical conditions corresponding to the inhibition zone of germs of Clostridium botulinium.

2. A process for preparation according to Claim 1, characterised in that it comprises carrying out the thermal treatment in a water-bath or oven, with a relatively low gradient of temperature rise between a minimum temperature and a maximum temperature which are selected taking into account the rheological characteristics of the prepared food product, with the maximum temperature always remaining lower than 100° C in order to prevent the appearance of the product from being destroyed.

3. A process for preparation according to one of Claims 1 and 2, characterised in that the pasteurising value (P) is deduced from the measured pH, by means of a linear portion of a semi-logarithmic curve representative of a continuous and increasing function of the pasteurising value as a function of the pH.

4. A process for preparation according to one of Claims 1 to 3, characterised in that it comprises at the start of the thermal treatment, measuring the initial temperature of the product, determining the range of temperatures of the thermal treatment by means of a series of curves giving, for different values of pH, the pasteurising values as a function of the temperature and of the time of cooking, calculating, based on this series of curves, the sum of the pasteurising points for the measured pH, and, when the cooking value is reached, preserving the thermal treatment and the physico-chemical conditions of the product thus defined, if said sum is greater than the pasteurising value, whereas if said sum is lower than the pasteurising value, the pH of the product and the maximum temperature of thermal treatment are modified, and that if said sum is equal to the pasteurising value, only the maximum temperature of the thermal treatment is modified, so as to obtain a new thermal treatment for which said sum will be greater than the pasteurising value as soon as the cooking value has been reached, measuring the AW ratio after a rapid chilling in the core of the product, reading on the curves expressing AW as a function of the pH if the product is in an area of stability and inhibition of Clostridium, and if the product is in the germination zone, modifying the pH and the AW ratio such that it comes within said inhibition zone.

5.  A process for preparation according to one of Claims 1 to 4, characterised in that the pH of the product is measured in the solid phase and in the sauce, and that the highest pH is retained for the treatment.

6.  A process for preparation according to one of Claims 1 to 5, characterised in that it comprises applying the thermal treatment by reproducing a curve of penetration of the core heat, at the critical point of the product, which has been recorded on determining the cooking value.

**Patentansprüche**

1.  Verfahren zur Zubereitung von Nahrungsmitteln für längere Konservierung, ohne deren Qualitäten und organoleptischen Eigenschaften zu zerstören, bestehend aus:
    - Bestimmung des Garwertes (Cg) des Produktes und
    - Wärmebehandlung oder Garung des Produktes, maximal bis Erreichen des Garwertes ($C_g$),
    dadurch gekennzeichnet, daß es die folgenden Schritte umfaßt:
    - Messung des pH-Wertes des Produktes, aus dem der entsprechende Pasteurisationswert (P) hergeleitet wird,
    - Messung der Wasseraktivität (AW) des Produktes und
    - Bestimmung der Wärmekurve der Wärmebehandlung bei verschiedenen pH-Werten und/oder verschiedenen AW-Werten des Produktes, wobei sicherzustellen ist, daß der pH-Wert mindestens 4,5 ist und daß sich die Gartemperaturin der Zeit so entwickelt, daß die Mindestletaltemperatur überschritten wird, unterhalb derer D-Streptokokken nicht zerstört werden, um gleichzeitig zu erreichen, daß bei Erreichen des Garwertes ($C_g$) der Pasteurisationswert (P) erreicht, vorzugsweise überschritten wird und daß die physikalisch-chemischen Bedingungen, in denen sich das Produkt befindet, denjenigen der Hemmzone der Clostridium botulinium Keime entsprechen.

2.  Verfahren nach Anspruch 1, dadurch gekennzeichnet, daß die Wärmebehandlung im Wasserbad oder im Trockenschrank mit einer relativ flachen Temperaturanstiegskurve zwischen einer Minimaltemperatur und einer Maximaltemperatur erfolgt, die unter Berücksichtigung der rheologischen Eigenschaften des zu behandelnden Nahrungsmittels gewählt werden, wobei jedoch die Maximaltemperatur immer unter 100 ° C bleiben muß, um zu verhindern, daß sich das Aussehen des Produktes verändert.

3.  Verfahren nach Anspruch 1 oder 2, dadurch gekennzeichnet, daß der Pasteurisationswert (P) vom gemessenen pH-Wert hergeleitet wird mittels eines linearen Teilabschnittes einer halblogarithmischen Kurve zur Darstellung einer stetig steigenden Funktion des Pasteurisationswertes in Abhängigkeit vom pH-Wert.

4.  Verfahren nach einem der Ansprüche 1 bis 3, dadurch gekennzeichnet, daß zu Beginn der Wärmebehandlung die Ausgangstemperatur des Produktes gemessen wird, der Temperaturbereich der Wärmebehandlung mittels eines Kurvenbündels bestimmt wird, das die Pasteurisationswerte in Abhängigkeit von der Gartemperatur und der Garzeit bei verschiedenen pH-Werten angibt, unter Zugrundelegen dieses Kurvenbündels die Summe der Pasteurisationspunkte für den gemessenen pH-Wert berechnet wird, bei Erreichen des Gartwertes die auf diese Weise definierte Wärmebehandlung und die physikalisch-chemischen Bedingungen des Produktes beibehalten werden, wenn die genannte Summe über dem Pasteurisationswert liegt, während man, wenn die genannte Summe unterhalb des Pasteurisationswertes liegt, den pH-Wert des Produktes und die Maximaltemperatur der Wärmebehandlung ändert,und, wenn die genannte Summe gleich dem Pasteurisationswert ist, lediglich die Maximaltemperatur der Wärmebehandlung ändert, um eine neue Wärmebehandlung zu erzielen, bei der die genannte Summe bei Erreichen des Garwertes über dem Pasteurisationswert liegt, der AW-Wert nach rascher Innenabkühlung des Produktes gemessen wird, auf den Kurven, die den AW-Wert in Abhängigkeit vom pH-Wert ausdrücken, abgelesen wird, ob sich das Produkt in einer Stablitätszone und in einer Hemmzone des Clostridiums befindet und ob es sich in der Keimzone befindet, der pH-Wert und der AW-Wert so verändert werden, daß das Produkt in die Hemmzone kommt.

5. Verfahren nach einem der Ansprüche 1-4, dadurch gekennzeichnet, daß der pH-Wert des Produktes in der festen Phase und in der Sauce gemessen wird, wobei der höchste pH-Wert für die Behandlung zugrundegelegt wird.

6. Verfahren nach einem der Ansprüche 1 - 5, dadurch gekennzeichnet, daß bei Anwendung der Wärmebehandlung eine Kurve zugrundegelegt wird, die das Eindringen der Wärme nach innen, zum kritischen Punkt des Produktes, darstellt und die bei der Bestimmung des Garwertes registriert wurde.

EP 0 230 167 B1

FIG. 1

FIG. 2

13

FIG. 3